## Europäisches Patentamt
## European Patent Office
## Office européen des brevets

(19)

(11) Veröffentlichungsnummer: **0 084 672**
**B1**

(12) **EUROPÄISCHE PATENTSCHRIFT**

(45) Veröffentlichungstag der Patentschrift:
20.03.85

(51) Int. Cl.⁴: **B 29 B 7/00**

(21) Anmeldenummer: **82111947.6**

(22) Anmeldetag: **23.12.82**

(54) **Vorrichtung zum Erzeugen eines vorzugsweise chemisch reaktionsfähigen Gemisches aus mindestens zwei Kunststoffkomponenten.**

(30) Priorität: **22.01.82 DE 3201903**

(43) Veröffentlichungstag der Anmeldung:
**03.08.83 Patentblatt 83/31**

(45) Bekanntmachung des Hinweises auf die Patenterteilung:
**20.03.85 Patentblatt 85/12**

(84) Benannte Vertragsstaaten:
**DE FR GB IT**

(56) Entgegenhaltungen:
**EP - A - 0 024 330**
**EP - A - 0 079 510**
**DE - A - 2 823 398**
**DE - A - 2 847 504**
**GB - A - 2 086 747**

(73) Patentinhaber: **Elastogran Maschinenbau GmbH & Co.,
Mitterstrassweg, D-8021 Strasslach vor München (DE)**

(72) Erfinder: **Schlueter, Klaus, Windeckstrasse 1c,
D-8000 Muenchen 70 (DE)**

(74) Vertreter: **Welzel, Dr. Gunther et al, c/o BASF
Aktiengesellschaft Carl-Bosch-Strasse 38,
D-6700 Ludwigshafen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung bezieht sich auf eine Vorrichtung zum Erzeugen eines vorzugsweise chemisch reaktionsfähigen Gemisches aus mindestens zwei Kunststoffkomponenten, bestehend aus einem Gehäuse, in dem Einlasskanäle für die einzelnen Kunststoffkomponenten sowie eine Führungsbohrung für einen hin- und herbewegbaren Ausstosskolben angebracht sind, wobei ein Abschnitt dieser Führungsbohrung als Mischkammer ausgebildet ist, die in der zurückgefahrenen Stellung des Ausstosskolbens durch dessen Stirnfläche begrenzt ist, während auf der gegenüberliegenden Seite die Austrittsöffnung für das Kunststoffkomponentengemisch vorgesehen ist, und wobei anschliessend an die Mischkammer ein Drosselorgan angeordnet ist, das aus zwei zumindest annähernd koaxial zueinander angeordneten Düsenkörpern besteht, die in die Führungsbohrung einschiebbar sind und zwischen sich einen einstellbaren Spalt definieren.

Mischvorrichtungen der gennanten Art arbeiten in der Regel nach dem Gegenstrominjektionsprinzip, d. h., die als Düsen oder Lochblenden gestalteten Einspritzöffnungen sind einander gegenüberliegend angeordnet.

Um eine gute Vermischung zu erzielen, ist innerhalb der Mischkammer ein bestimmer Druck einzuhalten. Zur Regelung dieses Staudruckes ist es bei Mischvorrichtungen mit Ausstosskolben bekannt, zwischen dem Bereich der Eintrittsöffnungen und der Austrittsöffnung ein in die Mischkammer quer verschiebbares Drosselorgan vorzusehen. Dieser Drosselorgan ist aber nicht geeignet, dem aus der Mischkammer austretenden Gemischstrom ein ausreichend laminares, ruhiges Strömungsverhalten aufzuerlegen, um beim Einlaufen in das Formwerkzeug eine geschlossene Fliessfront zu erhalten.

Weiterhin ist aus der DE-B Nr. 2612812 ein Mischkopf mit Drosselorgan bekannt, welches quer zur Mischkammer verschiebbar ist und einen Durchlass aufweist, durch den ein Ausstosskolben in seiner Ausstossstellung bewegbar ist. Auf diese Weise wird eine Art Zusatzmischkammer gebildet, die jedoch eine Verbesserung der Mischgüte durch Beeinflussung des Vor- und Nachlaufs der Kunststoffkomponenten, wenn überhaupt, nur bedingt zulässt.

Schliesslich beschreibt die EP-A1 Nr. 0079510 (veröffentlicht am 25.5.1983), von der zur Darstellung der Erfindungsgattung im Oberbegriff des Anspruchs 1 ausgegangen ist, eine Vorrichtung (Mischkopf), bei der die Kunststoffkomponenten über Eintrittsdüsen in eine Mischkammer eintreten. Die Eintrittsdüsen bzw. die ihnen zugeordneten Düsenschieber sind dabei in die Mischkammer hinein und aus dieser heraus verschiebbar. Auf diese Weise kann die Entfernung der Eintrittsdüsen voneinander im Sinne einer Anpassung an die zu verarbeitenden Kunststoffkomponenten verändert werden. Für die Steuerung der Komponentenzufuhr sind jedoch zusätzliche Absperrorgane erforderlich, so dass das Mischergebnis zu Beginn und am Ende eines Spritzzyklus beeinträchtigt werden kann.

Mit der Erfindung soll eine Vorrichtung zum Erzeugen eines vorzugsweise chemisch reaktionsfähigen Gemisches aus mindestens zwei Kunststoffkomponenten geschaffen werden, die eine über den gesamten Spritzzyklus gleichbleibend gute Vermischungsintensität durch Einstellbarkeit des Mischkammerdruckes und des Mischkammervolumens gewährleistet. Zur Lösung dieser Aufgabe werden bei einer gattungsgemässen Vorrichtung die Massnahmen nach dem Kennzeichen des Anspruchs 1 vorgeschlagen.

Erfindungsgemäss wird der Beginn des Spritzzyklus dadurch festgelegt, dass die Düsenkörper auf einen definierten Abstand zueinander in die Führungsbohrung bzw. Mischkammer eingeschoben werden. Gleichzeitig damit erfolgt die Freigabe der Komponentenströme in die Mischkammer. Die Einstellbarkeit des Mischkammerdruckes wird im wesentlichen durch die Einstellung des Hubes der Düsenkörper bestimmt, indem diese derart einstellbar sind, dass der Spalt zwischen den beiden Düsenkörpern, d. h. der Durchströmquerschnitt aus der Mischkammer, variierbar ist. Zudem kann das Mischkammervolumen durch die Stellung des Ausstosskolbens, der beispielsweise mit Hilfe einer Hubbegrenzung in die jeweils gewünschte Position gebracht werden kann, ebenfalls verändert werden. Durch diese zusätzliche Variable der Mischkammergeometrie wird erreicht, dass durch Anpasung des Mischkammervolumens der Vor- und Nachlauf der Kunststoffkomponenten, die zu Fehlstellen im Formteil fuhren, vermieden wird, d. h. die direkte Einflussnahme auf die Strömungsverhältnisse in der Mischkammer führt zu deutlich verbesserten Mischgüten.

Das spülmittelfreie Arbeiten ohne Materialverlust ergibt sich durch den in bezug auf die Führungsbohrung querschnittsgleichen Ausstosskolben, der gegen Ende des Formfüllvorganges die Mischkammer entleert und nach entsprechender Stellung der Düsenkörper bis an die Austrittsöffnung der Führungsbohrung bewegbar ist. Das zeitliche Zusammenwirken von Düsenkörpern und Ausstosskolben wird mittels einer Steuereinrichtung, die elektrisch, hydraulisch, mechanisch und/oder pneumatisch arbeitet, erreicht.

Die Eintrittsöffnungen für die Kunstoffkomponenten sind derart in bezug auf die Mischkammer angeordnet, dass die Kunststoffkomponenten unter einem Winkel aufeinandertreffen. Dieser Treffpunkt der Komponentenstrahlen ist entsprechend der Anordnung der Eintrittsöffnungen in den Düsenkörpern sowie der Stellung der Düsenkörper veränderbar, wodurch insbesondere die Strahlausbreitung bzw. das Strahlvolumen für eine optimale Vermischung der Kunststoffkomponente beeinflusst werden kann. Dabei sind die Düsenkörper vorzugsweise senkrecht zur Längsachse der Führungsbohrung verschiebbar angeordnet. Es ist jedoch auch denkbar, die Düsenkörper nicht diametral gegenüberliegend, sondern unter einem Winkel zueinander anzuordnen.

Nach einer weiteren Ausgestaltung der Erfindung sind die Düsenkörper in ihrem Abstand zur Längsachse der Führungsbohrung unabhängig voneinander verstellbar. Dadurch ist es möglich, in der Mischkammer, insbesondere wenn diese einen kreisrunden Querschnitt aufweist, eine zusätzliche Wirbelbewegung zu erzeugen, die einen entsprechenden Einfluss auf das Mischergebnis hat.

In einer besonders vorteilhaften Ausführungsform der Erfindung ist die Hubbewegung der Düsenkörper in Abhängigkeit des Mischkammerdruckes steuerbar. Hierzu wird der Druck in der Mischkammer über ein Messgerät, beispielsweise einen Sensor, aufgenommen, in Impulse digitalisiert und die ermittelten Istwerte mit digitalisierten Sollwertvorgaben verglichen und bei Abweichungen der Soll-/Istwert-Vergleichs das Ergebnis zu Regelzwecken verwendet. Es sind danach über entsprechende Einrichtungen, wie Regelventile, sowohl die Stellung der Düsenkörper, d. h. die Grösse des Spaltes zwischen den Düsenkörpern, als auch die Stellung des Ausstosskolbens und damit das Mischkammervolumen zu verändern. Auf diese Weise können bei der Verarbeitung von Kunststoffkomponenten mit den unterschiedlichsten Eigenschaften zur Erzeugung der unterschiedlichsten Endprodukte die jeweils optimalen Verhältnisse während der gesamten Formfüllung aufrechterhalten werden.

Die Erfindung wird im folgenden unter Hinweis auf die Zeichnungen anhand eines Ausführungsbeispiels näher erläutert.

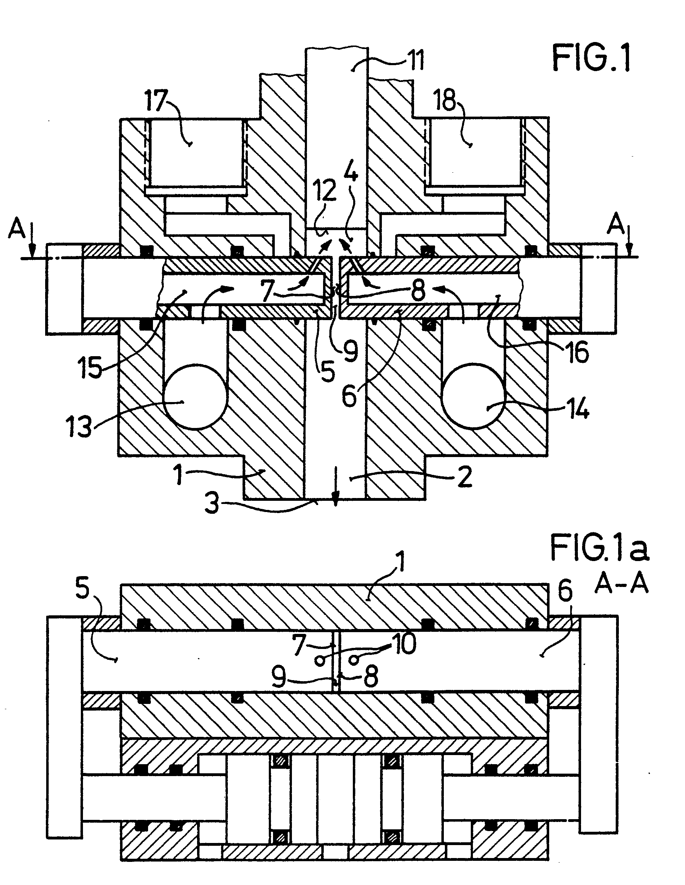

Die dargestellte Mischvorrichtung besteht im wesentlichen aus einem Gehäuse 1, in dem eine Führungsbohrung 2 für einen Ausstosskolben 11 vorgesehen ist. Mit 3 ist die Austrittsöffnung der Führungsbohrung bezeichnet. Ein Abschnitt der Führungsbohrung ist als Mischkammer 4 ausgebildet. Diese wird in der Mischstellung des Ausstosskolbens (Fig. 1) durch dessen Kolbenboden 12 sowie zwei diametral gegenüberliegende und in die Führungsbohrung einschiebbare Düsenkörper 5 und 6 begrenzt. Dabei entsteht zwischen den Stirnflächen 7 und 8 der Düsenkörper ein einstellbarer Spalt 9 als Auslassöffnung aus der Mischkammer. Jeder Düsenkörper ist mit wenigstens einer Eintrittsöffnung 10 versehen, wobei die Eintrittsöffnungen derart angebracht sind, dass die durch sie einströmenden Kunststoffkomponenten in der Mischkammer unter einem Winkel aufeinandertreffen. Die Zuführung der Kunststoffkomponenten erfolgt über Eintrittskanäle 13 und 14 in dem Gehäuse 1 sowie Bohrungen 15 und 16 in den Düsenkörpern.

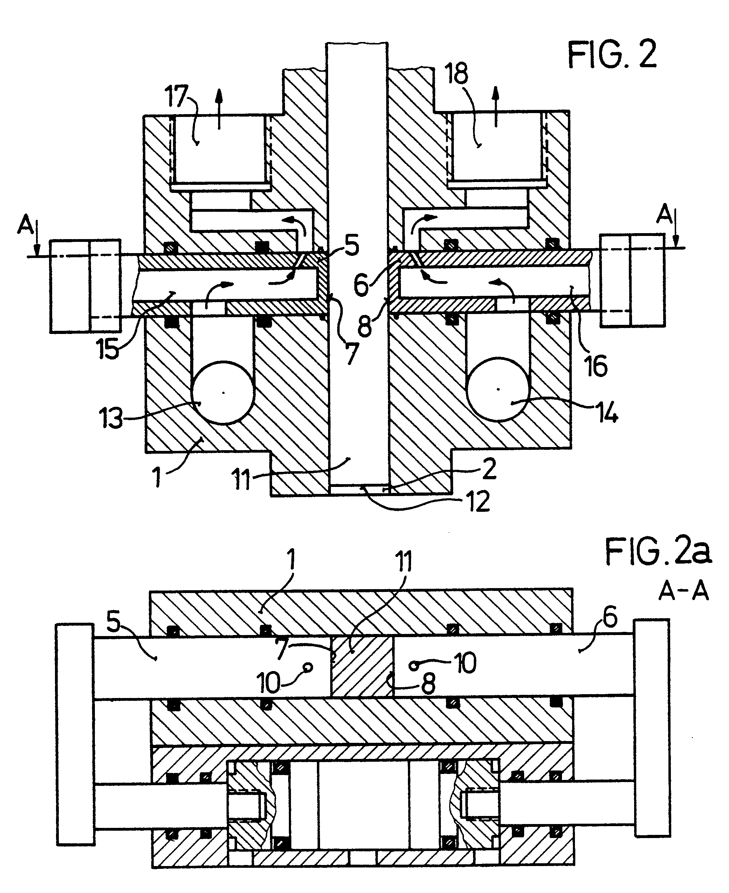

Sobald ein Spritzzyklus beendet ist, werden die Düsenkörper 5 und 6 in ihre andere Endstellung bewegt, d. h. aus der Führungsbohrung 2 zurückgezogen, so dass ihre Stirnflächen 7 und 8 mit der Wandung der Führungsbohrung bündig abschliessen. Dabei werden die Eintrittsöffnungen verschlossen, und es erfolgt gleichzeitig ein mechanisches Zwangsreinigen der Düsenkörper durch Abstreifen eventueller Gemischreste von ihren Oberflächen. Der in seinem Querschnitt der Führungsbohrung angepasste Ausstosskolben 11 sorgt dann für eine endgültige Reinigung durch Bewegung bis in den Bereich der Austrittsöffnung 3. In dieser in der Fig. 2 gezeigten Stellung, bei der es sich um die Schliessstellung handelt, strömen die Kunststoffkomponenten durch die Eintrittskanäle 13, 14, Düsenkörper 5, 6 und Rücklaufkanäle 10, 18 zu Vorratsbehältern (in der Zeichnung nicht dargestellt) zurück.

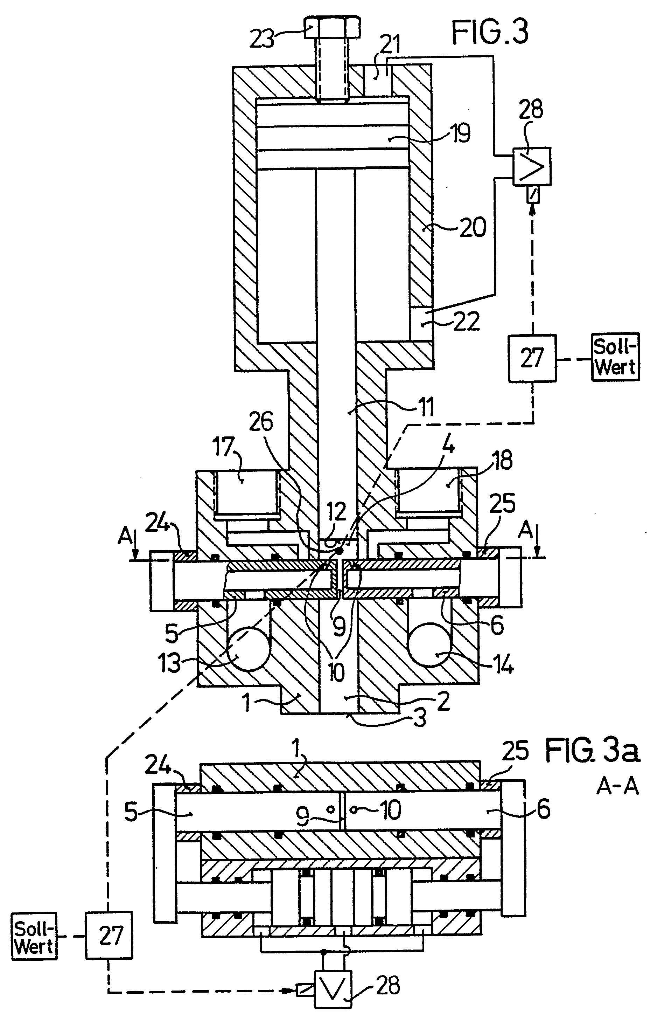

Gemäss Fig. 3 erfolgt die Bewegung des Ausstosskolbens 11 mit Hilfe einer hydraulischen Kolben/Zylinder-Einheit an seinem rückwärtigen Ende. Der Hydraulikkolben 19 ist beidseitig beaufschlagbar und in einem Zylinder 20 mit Leitungsanschlüssen 21 und 22 geführt. Durch die Stellschraube 23 kann der Hub des Ausstosskolbens und damit das Volumen der Mischkammer 4 variiert werden. Die Stellung der Düsenkörper 5 und 6 wird durch Anschläge 24 und 25 bestimmt.

Es hat sich gezeigt, dass eine optimale Mischgüte insbesondere bei einem definierten Druck in der Mischkammer 4 zu erreichen ist. Zur Aufrechterhaltung dieses optimalen Betriebspunktes wird der Druck in der Mischkammer mittels eines Sensors 26 aufgenommen und die ermittelten Istwerte in der Einrichtung 27 mit Sollwertvorgaben verglichen. Abweichungen bei diesem Soll/Istwert-Vergleich werden zur Aussteuerung eines Regelventils 28 herangezogen, über das die Stellung der Düsenkörper 5 und 6 sowie die des Ausstosskolbens 11 verändert werden. Dabei können die Düsenkörper und der Ausstosskolben sowohl gleichzeitig als auch unahängig voneinander bewegt und damit auch ein zeitveränderlicher Verlauf des Druckes in der Mischkammer 4 eingestellt werden.

**Patentansprüche**

1. Vorrichtung zum Erzeugen eines vorzugsweise chemisch reaktionsfähigen Gemisches aus mindestens zwei Kunststoffkomponenten, bestehend aus einem Gehäuse (1), in dem Einlasskanäle (13, 14) für die einzelnen Kunststoffkomponenten sowie eine Führungsbohrung (2) für einen hin- und herbewegbaren Ausstosskolben (11) angebracht sind, wobei ein Abschnitt dieser Führungsbohrung (2) als Mischkammer (4) ausgebildet ist, die in der zurückgefahrenen Stellung des Ausstosskolbens (11) durch dessen Stirnfläche (12) begrenzt ist, während auf der gegenüberliegenden Seite die Austrittsöffnung (3) für das Kunststoffkomponentengemisch vorgesehen ist, und wobei anschliessend an die Mischkammer (4) ein Drosselorgan ausgebildet ist, das aus zwei zumindest koaxial zueinander angeordneten Düsenkörpern (5 und 6) besteht, die in die Führungsbohrung (2) einschiebbar sind und zwischen sich einen einstellbaren Spalt (9) definieren, dadurch gekennzeichnet, dass die Düsenkörper (5 und 6) während ihres Einschiebens in die Führungsbohrung (2) Eintrittsöffnungen (10) für die Kunststoffkomponenten freigeben und dass die Eintrittsöffnungen (10) derart in bezug auf die Mischkammer (4) angeordnet sind, dass die Kunststoffkomponenten unter einem Winkel in der Mischkammer (4) aufeinandertreffen.

2. Vorrichtung nach Anspruch 1, dadurch gekennzeichnet, dass die Düsenkörper (5 und 6) in ihrem Abstand zur Längsachse der Führungsbohrung (2) unabhängig voneinander verstellbar sind.

3. Vorrichtung nach den Ansprüchen 1 und 2, dadurch gekennzeichnet, dass die Hubbewegung der Düsenkörper (5 und 6) in Abhängigkeit des Mischkammerdruckes steuerbar ist.

**Revendications**

1. Dispositif pour l'obtention d'un mélange réactif, de préférence chimiquement, d'au moins deux composants de matière plastique, constitué par un carter (1) dans lequel sont ménagés des canaux d'entrée (13, 14) pour les différents composants de matière plastique ainsi qu'un alésage de guidage (2) pour un piston éjecteur (10) pouvant être animé d'un mouvement de va-et-vient, une section de cet alésage (2) étant agencée en chambre de mélange (4) qui est délimitée, dans la position de retour du piston (11), par la face de bout de ce dernier tandis que du côté opposé est prévu l'orifice de sortie (3) pour le mélange des composants de matière plastique, et un organe d'étranglement étant formé immédiatement à la suite de la chambre de mélange (4) et constitué de deux corps de buses (5 et 6) au moins sensiblement coaxiaux dans l'alésage (2) et définissent entre eux un interstice (9) réglable, caractérisé par le fait que les corps de buses (5 et 6) libèrent, quand ils sont poussés dans l'alésage (2), des orifices d'entrée (10) pour les composants de matière plastique, et les orifices d'entrée (10) sont disposés, par rapport à la chambre de mélange (4), de manière que les composants de matière plastique se rencontrent, dans la chambre de mélange (4), sous un angle.

2. Dispositif selon la revendication 1, caractérisé par le fait que les corps de buses (5 et 6), en ce qui concerne leur distance à l'axe longitudinal de l'alésage (2), sont réglables indépendamment l'un de l'autre.

3. Dispositif selon les revendications 1 et 2, caractérisé par le fait que le mouvement de course des corps de buses (5 et 6) peut être commandé en fonction de la pression de la chambre de mélange.

**Claims**

1. Apparatus for producing a preferably chemically reactive mixture of two or more plastics components, which apparatus comprises a housing (1) having inlet channels (13, 14) for the individual plastics components and a guide bore (2) for an expulsion plunger (11) which can move to and fro, a portion of this guide bore (2) being constructed as a mixing chamber (4) which, in the retracted position of the expulsion plunger (11), is bounded by the end face (12) of the plunger, while at the opposite side is provided an outlet orifice (3) for the mixture of plastics components, a restrictor being located immediately downstream of the mixing chamber (4), the restrictor comprising two at least approximately coaxially arranged nozzle bodies (5 and 6) which can be pushed into the guide bore (2) and define an adjustable gap (9) between them, wherein the nozzle bodies (5 and 6), as they are pushed into the guide bore (2), open inlet orifices (10) for the plastics components, and the inlet orifices (10) are so arranged relative to the mixing chamber (4) that the plastics components impinge on one another at an angle in the mixing chamber (4).

2. Apparatus as claimed in Claim 1, wherein the nozzle bodies (5 and 6) can be adjusted independently of one another as regards their distance from the longitudinal axis of the guide bore (2).

3. Apparatus as claimed in Claims 1 and 2, wherein the stroke of the nozzle bodies (5 and 6) is controllable as a function of the mixing chamber pressure.

FIG.1

FIG.1a
A-A

FIG. 2

FIG. 2a

A-A

FIG.3

FIG.3a

A-A